# EUROPEAN PATENT APPLICATION

(11) **EP 3 315 999 A1**
(43) Date of publication of application: **02.05.2018**
(21) Application number: 16814089.5
(22) Date of filing: 25.05.2016
(51) Int. Cl.: G01S 17/89, G01C 3/06, G01S 17/10

(54) **DISTANCE IMAGE PROCESSING DEVICE, DISTANCE IMAGE PROCESSING METHOD, DISTANCE IMAGE PROCESSING PROGRAM, AND RECORDING MEDIUM**

(30) Priority: 24.06.2015 JP 2015126567
(71) Applicant: Konica Minolta, Inc., Tokyo 100-7015 (JP)
(72) Inventor: WATANABE, Taishi, Tokyo 100-7015 (JP)
(74) Representative: Hoffmann Eitle
(86) International application number: PCT/JP2016/065405
(87) International publication number: WO 2016/208318

(57) **Abstract**

A distance image processing device, a distance image processing method and a distance image processing program according to the present invention obtain a distance image having a plurality of pixels corresponding to each of a plurality of directions different from each other based on a plurality of transmitted waves and a plurality of reflected waves and determine a target region as noise if a gradient of a distance value between the target region and a predetermined peripheral with respect to the target region is within a predetermined range and a pulse width of the reflected wave relating to the target region is larger than a pulse width of the reflected wave relating to the peripheral region when a predetermined region in the distance image is the target region. A recording medium records such a distance image processing program.

## Description

### TECHNICAL FIELD

The present invention relates to a distance image processing device for processing a distance image, a distance image processing method, a distance image processing program and a recording medium recording the distance image processing program.

### BACKGROUND ART

A distance image is an image composed of a plurality of pixels represented by information indicating a distance to a subject and formed, for example, by assigning different colors according to the distance to the subject. Such a distance image is obtained, for example, using a LIDAR (Laser Imaging Detection and Ranging) technology.

This three-dimensional distance image technology is, for example, a technology for obtaining a period (transmission/reception period) until a transmitted wave is incident on a subject and returned as a reflected wave by receiving the reflected wave of the transmitted wave by the subject and generating the distance image by calculating a distance to the subject by multiplying a propagation speed of the transmitted wave by half the transmission/reception period.

In this three-dimensional distance image technology, a distance has been measured on the assumption that a reflected wave reflected from only one position on a target object (subject) is received. Thus, if an attempt is made to measure a distance to a location where distances to a front part (human part in this case) and a back part (wall part in this case) suddenly change, for example, like an outline part of a person standing at a distance from a wall, distance measurement accuracy is reduced since one transmitted wave may be reflected by each of the front part and the back part. A technique for avoiding such an inconvenience is disclosed, for example, in patent literature 1.

An image processing device disclosed in this patent literature 1 includes a pre-processor for removing a ghost part from a distance image, an edge extractor for extracting an edge from the distance image having the ghost part removed therefrom and a remover for removing a value of a distance of a pixel in the edge part extracted by the edge extractor in the distance image having the ghost part removed therefrom. Here, luminance is defined to represent the intensity of a reflected wave.

Since the image processing device disclosed in the above patent literature 1 removes the ghost part from the distance image based on a luminance image, image processing for obtaining the luminance image is necessary besides the distance image. Further, since the image processing device disclosed in the above patent literature 1 removes the ghost part from the distance image based on the luminance image, an image part may be removed as a ghost part even if a part having a low reflectance is present on one surface.

### CITATION LIST

### PATENT LITERATURE

Patent literature 1: Publication of Japanese Patent No. 5624998

### SUMMARY OF INVENTION

The present invention was developed in view of the above situation and aims to provide a distance image processing device, a distance image processing method and a distance image processing program capable of obtaining a more accurate distance image even if a plurality of objects are arranged one after another in a propagation direction of a transmitted wave. The present invention aims to provide a recording medium recording this distance image processing program.

A distance image processing device, a distance image processing method and a distance image processing program according to the present invention obtain a distance image having a plurality of pixels corresponding to each of a plurality of directions different from each other based on a plurality of transmitted waves and a plurality of reflected waves and determine a target region as noise if a gradient of a distance value between the target region and a peripheral region corresponding to the target region is within a predetermined range and a pulse width of the reflected wave relating to the target region is larger than a pulse width of the reflected wave relating to the peripheral region when a predetermined region in the distance image is the target region. A recording medium records such a distance image processing program. Thus, the distance image processing device, the distance image processing method and the distance image processing program according to the present invention can obtain a more accurate distance image even if a plurality of objects are arranged one after another along a propagation direction of a transmitted wave. According to the present invention, it is possible to provide a recording medium recording this distance image processing program.

The above and other objects, features and advantages of the present invention will become apparent from the following detailed description and the accompanying drawings.

### BRIEF DESCRIPTION OF DRAWINGS

FIG. 1 is a block diagram showing the configuration of a radar using a distance image processing device of an embodiment,
FIG. 2 is a perspective view showing an external configuration of the radar,
FIGS. 3 are a diagram and a chart showing a basic mechanism for generating a distance image in the radar,
FIG. 4 is a view showing an example of a distance image (distance image before noise removal) generated by the basic mechanism,
FIG. 5 is a view showing the distance image shown in FIG. 4 by a three-dimensional point cloud,
FIGS. 6 are charts showing a case where no noise is generated by a front object and a rear object located one after the other along a transmission direction of pulsed laser light,
FIGS. 7 are charts showing a case where noise is generated by the front object and the rear object located one after the other along the transmission direction of the pulsed laser light,
FIG. 8 is a flow chart showing the operation of the radar,
FIG. 9 is a view showing noise regions judged by a process shown in the flow chart shown in FIG. 8 as white regions and regions not judged as noise as black regions, and
FIG. 10 is a view showing the distance image of FIG. 4 having the white regions in FIG. 9 removed therefrom by a three-dimensional point cloud.

### DESCRIPTION OF EMBODIMENT

Hereinafter, one embodiment of the present invention is described with reference to the drawings. Note that components denoted by the same reference signs have the same configurations in each figure and the description thereof is omitted as appropriate. In this specification, components are denoted by reference signs without suffix when being collectively called, while being denoted by reference signs with suffix when being mentioned as individual components.

A distance image processing device in this embodiment includes a distance image acquirer configured to transmit predetermined pulsed transmitted waves in a plurality of directions different from each other, receive a plurality of reflected waves based on the plurality of respective transmitted waves and obtain a distance image having a plurality of pixels corresponding to the plurality of respective directions based on the plurality of transmitted waves and the plurality of reflected waves, and a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region. Such a distance image processing device may be incorporated into an apparatus for appropriate application or may be constituted by a single device, e.g. a computer including the distance image acquirer. Here, a distance image processing device incorporated into a radar is described as an example.

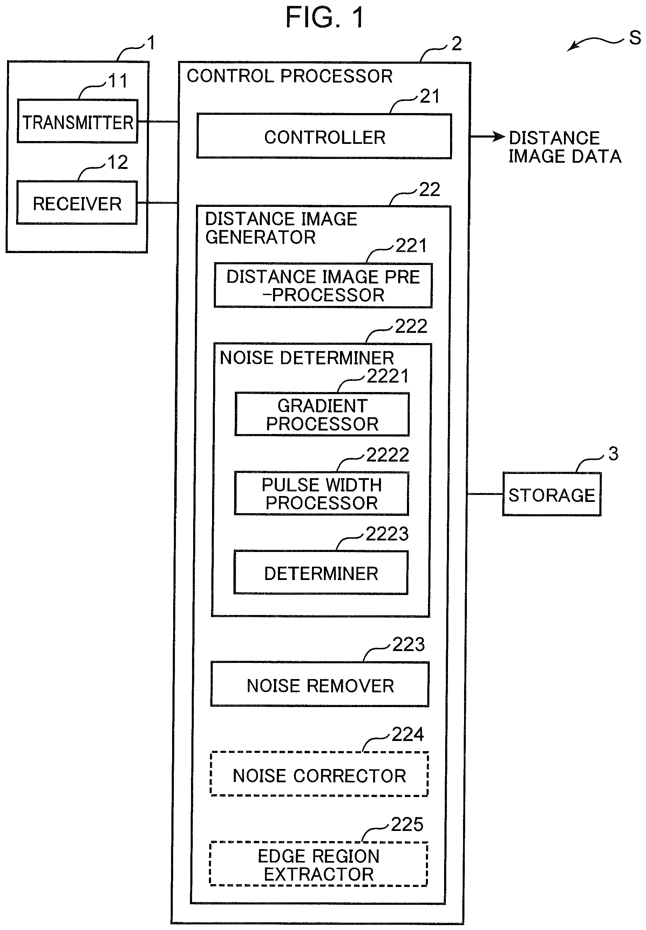

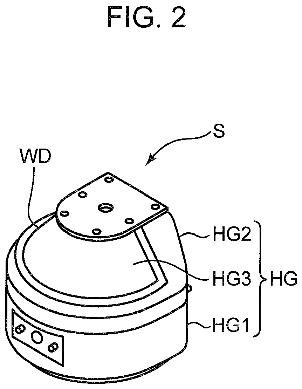

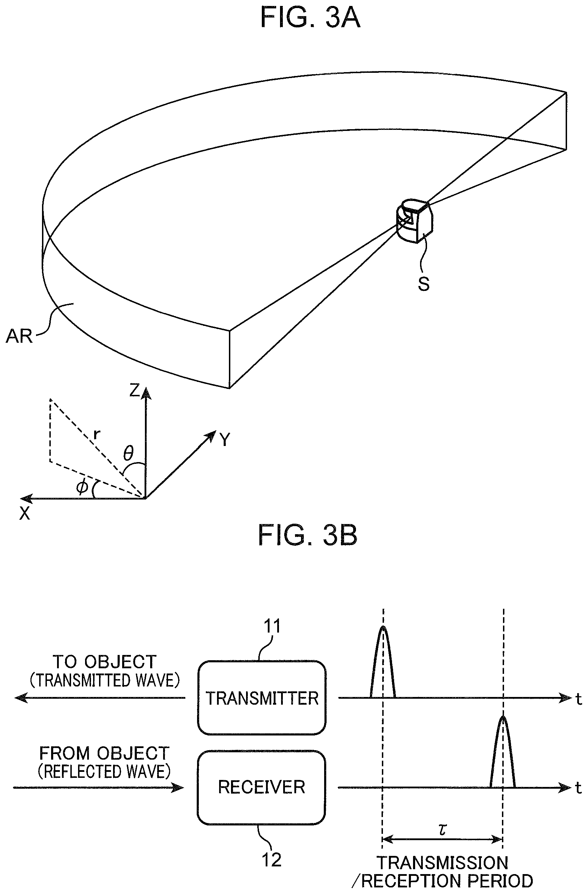

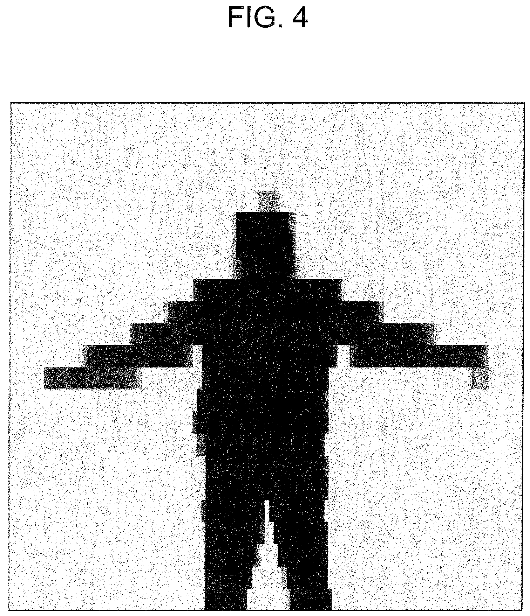

FIG. 1 is a block diagram showing the configuration of the radar using the distance image processing device of the embodiment. FIG. 2 is a perspective view showing an external configuration of the radar. FIGS. 3 are a diagram and a chart showing a basic mechanism for generating a distance image in the radar. FIG. 3A shows a state of scanning and FIG. 3B is a chart showing a transmission/reception period. FIG. 4 is a view showing an example of a distance image (distance image before noise removal) generated by the basic mechanism.

The radar S using the distance image processing device of the embodiment includes a transmitter/receiver 1, a control processor 2, a storage 3 and a housing HG (see FIG. 2) as shown in FIG. 1.

As shown in FIG. 2, the housing HG includes a lower member HG1 having a bottomed semi-cylindrical shape and an upper member HG2 coupled to an upper part of the lower member HG1 and having a lidded hollow truncated conical shape, at least the transmitter/receiver 1 is housed in an internal space formed by these lower member HG1 and upper member HG2, and a protecting member HG3 is fitted and fixed to an opening WD open in an oblique curved side surface of the upper member HG1. Note that the control processor 2 and the storage 3 in the radar S may be housed in the housing HG or may be provided outside the housing HG. Since the protecting member HG3 is a member made of a material which allows the passage of transmitted waves and reflected waves to be described later and configured to protect the transmitter/receiver 1, certain strength is required. Further, since a transmitted wave is laser light and a reflected wave is reflected light of this laser light in this embodiment, the protecting member HG3 is formed of a material such as polycarbonate or glass having translucency to allow the passage of light in a predetermined wavelength range having a wavelength of the laser light as a center wavelength.

The transmitter/receiver 1 is a device connected to the control processor 2 and configured to transmit predetermined pulsed transmitted waves in a plurality of directions different from each other and receive a plurality of reflected waves based on the plurality of respective transmitted waves. More specifically, the transmitter/receiver 1 includes a transmitter 11 configured to transmit the predetermined pulsed transmitted waves in the plurality of directions different from each other and a receiver 12 configured to receive the plurality of reflected waves based on the plurality of respective transmitted waves. The receiver 12 outputs digital signals corresponding to the intensity of the received reflected waves to the control processor 2. The transmitted wave is, for example, light, an electromagnetic wave such as a millimeter wave, a sound wave such as an ultrasonic wave or the like. In this embodiment, the transmitted wave is pulsed laser light. Thus, in this embodiment, the transmitter 11 includes a laser light source for emitting pulsed laser light such as a semiconductor laser and a scanning optical system for successively irradiating the laser light emitted from the laser light source in the plurality of directions different from each other. The scanning optical system includes, for example, an actuator such as a motor and a mirror (reflection mirror) and successively changes an incident angle of the laser light emitted from the laser light source by rotating the mirror about a predetermined axis. In this way, the scanning optical system successively irradiates the pulsed laser light emitted from the laser light source in the plurality of directions different from each other, for example, in a predetermined irradiation range AR shown in FIG. 3A. As shown in FIG. 3A, if an XYZ orthogonal coordinate system in which a forward direction of the radar S is an X direction, a height direction of the radar S orthogonal to the forward direction is a Z direction and a direction orthogonal to each of the X and Z directions is a Y direction is set and a spherical coordinate system with a moving radius r and two variation angles θ, φ is set with respect to this XYZ orthogonal coordinate system, the irradiation range AR is a range in which the variation angle θ is 90°±α (α is, for example, 5°, 7°, 10° or 15°) and the variation angle φ is ±90° in an example shown in FIG. 3A. Note that the variation angle θ is an angle formed between the projection of the moving radius r on an XY plane and an X axis and the variation angle φ is an angle formed between the moving radius r and a Z axis. Further, the irradiation range shown in FIG. 3A is merely an example, arbitrary and not limited to the example shown in FIG. 3A.

The storage 3 is a circuit connected to the control processor 2 and configured to store various predetermined programs and various predetermined pieces of data in accordance with a control of the control processor 2. The various predetermined programs include control processing programs such as, for example, a transmission/reception program for transmitting the waves in the plurality of directions different from each other and receiving a plurality of reflected waves based on the plurality of transmitted waves and distance image generation programs for generating a distance image having a plurality of pixels corresponding to the plurality of respective directions based on the plurality of transmitted waves and the plurality of reflected waves. The distance image generation programs include a distance image pre-processing program for generating a distance image before noise removal by calculating a distance to a subject (object) based on the transmitted wave and the reflected wave corresponding to the pixel (direction) for each of the plurality of pixels (the plurality of directions), a noise determination program for judging a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image generated by the distance image pre-processing program is the target region, a noise removal program for setting a pixel value of the target region determined as noise by the noise determination program to a predetermined noise pixel value representing noise, and the like. The above various predetermined pieces of data include various pieces of data such as data necessary to execute various programs and data obtained by executing the various programs. The storage 3 includes, for example, a ROM (Read Only Memory), which is a nonvolatile memory element, an EEPROM (Electrically Erasable Programmable Read Only Memory), which is a rewritable nonvolatile memory element, or the like. The storage 3 includes a RAM (Random Access Memory) or the like serving as a so-called working memory of the control processor 2 for storing data and the like generated during the execution of the predetermined programs.

The control processor 2 is connected to the transmitter/receiver 1 and the storage 3, and is a circuit configured to control each component of the radar S according to the function of each component and transmitting the waves and to generate a distance image by receiving the reflected waves. The control processor 2 includes, for example, a CPU (Central Processing Unit) and its peripheral circuits. The control processor 2 is functionally provided with a controller 21 and a distance image generator 22 by executing the control processing programs.

The controller 21 controls each component of the radar S according to the function of each component.

The distance image generator 22 generates a distance image having a plurality of pixels corresponding to the plurality of respective directions based on the plurality of transmitted waves and the plurality of reflected waves. In this embodiment, the distance image generator 22 is functionally provided with a distance image pre-processor 221, a noise determiner 222 and a noise remover 223.

The distance image pre-processor 221 calculates a distance to the subject (object) based on the transmitted wave and the reflected wave corresponding to the pixel (direction) for each of the plurality of pixels (plurality of directions). In this way, the distance image pre-processor 221 generates the distance image before noise removal. More specifically, the distance image pre-processor 221 obtains a transmission/reception period τ from a transmission time of the transmitted wave corresponding to the pixel (direction) to a reception time of the reflected wave based on the transmitted wave for each of the plurality of pixels (plurality of directions) as shown in FIG. 3B, calculates the distance to the object having reflected the transmitted wave by multiplying a propagation speed of the transmitted wave by half the obtained transmission/reception period τ (TOF (Time Of Fright) method) and generates the distance image before noise removal. Each of the transmission time and the reception time is a pulse peak time, a pulse rise time or the like. Note that, in this case, an intermediate time between a pulse rise time and a pulse fall time may be set as a peak time, for example, as disclosed in Japanese Unexamined Patent Publication No. S62-134584. An example of the distance image before noise removal generated by this distance image pre-processor 221 is, for example, shown in FIG. 4. This distance image shown in FIG. 4 is obtained with a scene of a person standing in front of a white wall as a subject. In the distance image shown in FIG. 4, a pixel value is set closer to black as the subject is closer to the radar S and set closer to white as the subject is more distant from the radar S.

The noise determiner 222 determines a target region as noise if a gradient Gr of a distance value between the target region and a predetermined peripheral region located around the target region is within a predetermined range of thg1 to thg2 (thg1 ≤ Gr ≤ thg2) and a pulse width PW1 of the reflected wave relating to the target region is larger than a pulse width PW2 of the reflected wave relating to the peripheral region (PW1 > PW2) when is a predetermined region in the distance image before noise removal generated by the distance image pre-processor 221 is the target region. The gradient Gr of the distance value between the target region and the peripheral region is obtained by dividing a difference between a pixel value (distance in the X direction, distance in the front-rear direction) at a center position of the target region and a pixel value (distance in the X direction, distance in the front-rear direction) at a center position of the peripheral region by a difference between the center positon of the target region and that of the peripheral region in a vertical plane orthogonal to the X direction. The pulse width PW1 of the reflected wave relating to the target region is an average value of the pulse widths of the reflected waves relating to the pixels belonging to the target region. The pulse width PW2 of the reflected wave relating to the peripheral region is an average value of the pulse widths of the reflected waves relating to the pixels belonging to the peripheral region. For example, the noise determiner 222 may divide the distance image before noise removal into a plurality of regions and determine the region as noise for each of the plurality of regions if a gradient Gr of a distance value between this region and a predetermined peripheral region located around this region is within the predetermined range of thg1 to thg2 (thg1 ≤ Gr ≤ thg2) and the pulse width PW1 of the reflected wave relating to this region is larger than the pulse width PW2 of the reflected wave relating to the peripheral region (PW1 > PW2). However, in this embodiment, the noise determiner 222, for example, determines the pixel as noise for each of the plurality of pixels (plurality of directions) if a gradient Gr of a distance value between this pixel (target pixel) and a predetermined peripheral pixel located around this pixel is within the predetermined range of thg1 to thg2 (thg1 ≤ Gr ≤thg2) and a pulse width PW1 of the reflected wave relating to this pixel is larger than a pulse width PW2 of the reflected wave relating to the peripheral pixel (PW1 > PW2). In this case, the gradient Gr of the distance value between the pixel and the peripheral pixel is obtained by dividing a difference between a pixel value (distance in the X direction, distance in the front-rear direction) of this pixel and a pixel value (distance in the X direction, distance in the front-rear direction) of the peripheral pixel by a difference between the positon of this pixel and that of the peripheral pixel in a vertical plane orthogonal to the X direction. More specifically, the noise determiner 222 is functionally provided with a gradient processor 2221, a pulse width pre-processor 2222 and a determiner 2223.

The gradient processor 2221 calculates the gradient Gr of the distance value between the pixel and the predetermined peripheral pixel located around this pixel for each of the plurality of pixels (plurality of directions), determines whether or not this calculated gradient Gr of the distance value is within the predetermined range of thg1 to thg2 and notifies this determination result (pulse width determination result) to the determiner 2223.

The pulse width processor 2222 determines whether or not the pulse width PW1 of the reflected wave relating to the pixel is larger than the pulse width PW2 of the reflected wave relating to the peripheral pixel for each of the plurality of pixels (plurality of directions) and notifies this determination result (pulse width determination result) to the determiner 2223.

The determiner 2223 determines whether or not the pixel is noise based on the gradient determination result of the gradient processor 2221 and the pulse width determination result of the pulse width processor 2222 for each of the plurality of pixels (plurality of directions).

The noise remover 223 sets the pixel value of the target region determined as noise by the noise determiner 222 to the predetermined noise pixel value representing noise. In this way, a distance image after noise removal is generated. In this embodiment, the noise remover 223 sets the pixel value of the pixel set as noise by the determiner 2223 of the noise determiner 222 to the noise pixel value. The noise pixel value is a predetermined pixel value set in advance as the pixel value representing noise and is, for example, a value representing a distance infinity.

Next, the operation of the radar using the distance image processing device of the embodiment is described. Before that, a noise generation mechanism by the consideration of the inventor is described.

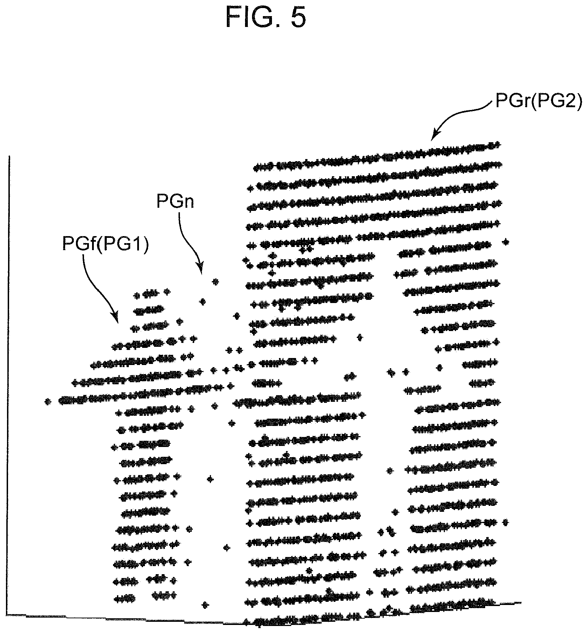

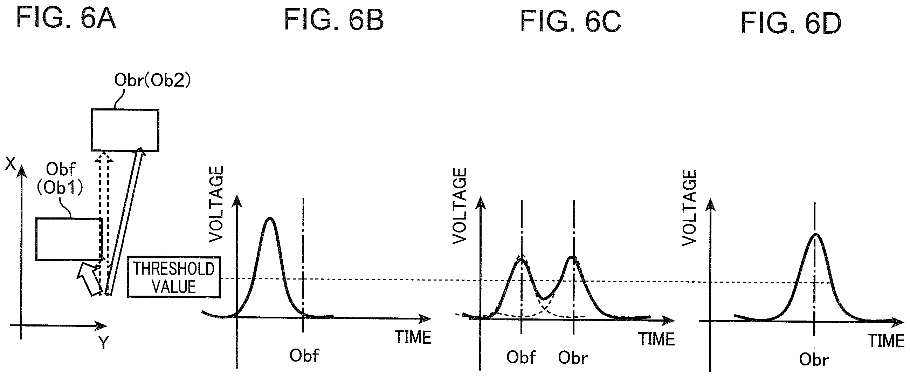

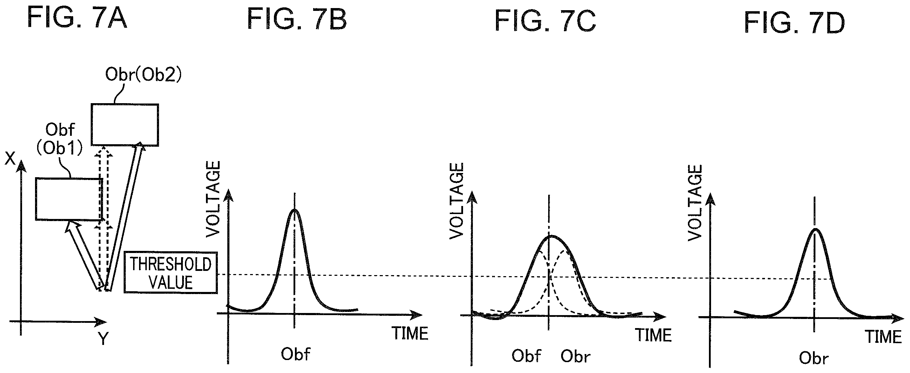

First, the noise generation mechanism by the consideration of the inventor is described. FIG. 5 is a view showing the distance image shown in FIG. 4 by a three-dimensional point cloud. FIGS. 6 are charts showing a case where no noise is generated by a front object and a rear object located one after the other along a transmission direction of pulsed laser light. FIGS. 7 are charts showing a case where noise is generated by the front object and the rear object located one after the other along the transmission direction of the pulsed laser light. FIGS. 6A and 7A are charts showing beam-like transmitted waves (pulsed laser light in this embodiment) irradiated to a front object Obf and a rear object Obr located one after the other along the transmission direction (X direction) of the pulsed laser light. FIGS. 6B and 7B show a signal waveform of the reflected wave reflected by the front object Obf on a side inwardly of an end of the front object Obf by a beam diameter in a transverse direction (Y direction) orthogonal to the transmission direction. FIGS. 6C and 7C show a signal waveform of the reflected wave reflected near an end of the front object Obf on the side of the rear object Obr in the transverse direction (Y direction). FIGS. 6D and 7D show a waveform of the reflected wave reflected by the rear object Obr on a side inwardly of an end of the rear object Obr by the beam diameter in the transverse direction (Y direction).

In the case of representing the above distance image before noise removal shown as an example in FIG. 4 and generated by the distance image pre-processor 221 by a three-dimensional point cloud, the distance image before noise removal is a point cloud shown in FIG. 5. The three-dimensional point cloud shown in FIG. 5 is obtained by a known technique from the pixel values (distances) of the distance image shown in FIG. 4, the variation angle θ (vertical angle) and the variation angle φ (lateral angle). As is understood from FIG. 5, if a plurality of objects Obk (a person Ob1 and a white wall Ob2 in an example shown in FIGS. 4 and 5) are arranged one after the other along the propagation direction of the transmitted wave, there is also a point cloud PGn between a point cloud PGf (point cloud PG1 corresponding to the person Ob1 in the example shown in FIG. 5) representing the front object Obf (person Ob1 in the example shown in FIGS. 4 and 5) and a point cloud PGr (point cloud PG2 corresponding to the white wall Ob2 in the example shown in FIG. 5) representing the rear object Obr (white wall Ob2 in the example shown in FIGS. 4 and 5). The point cloud PGn present between these point clouds PGf and PGr is not a point cloud originally supposed to be generated, but noise since no object is present between the front object Obf and the rear object Obr.

For example, if the front object Obf and the rear object Obr are relatively distant in the propagation direction of the beam-like transmitted wave (pulsed laser light in this embodiment) as shown in FIG. 6A, the transmitted wave is reflected only by the front object Obf on the side inwardly of the end of the front object Obf by the beam diameter as shown in FIG. 6A and the signal waveform of the reflected wave thereof is a single-peak pulse waveform having one peak as shown in FIG. 6B and the transmitted wave is reflected only by the rear object Obr on the side inwardly of the end of the rear object Obr by the beam diameter as shown in FIG. 6A and the signal waveform of the reflected wave thereof is a single-peak pulse waveform having one peak as shown in FIG. 6D. On the other hand, near the end of the rear object Obr on the side of the front object Obr, part of the transmitted wave is reflected by the front object Obf and the other part (remaining part) is reflected by the rear object Obr as shown in FIG. 6A. Here, since the front object Obf and the rear object Obr are relatively distant, the signal waveform of the reflected wave of the transmitted wave is a double-peak pulse waveform having two peaks as shown in FIG. 6C. Thus, if the front object Obf and the rear object Obr are relatively distant, the front object Obf and the rear object Obr can be distinguished from such a double-peak pulse waveform and noise is unlikely to be generated.

On the other hand, if the distance between the front object Obf and the rear object Obr becomes shorter (the front object Obf and the rear object Obr move toward each other) from the state shown in FIG. 6A, the respective peaks in the double-peak pulse waveform shown in FIG. 6C move toward each other. When the front object Obf and the rear object Obr are relatively close as shown in FIG. 7A, the signal waveform of the reflected wave becomes a single-peak pulse waveform as shown in FIG. 7C and this single-peak pulse waveform is a signal waveform of the reflected wave in which the reflected wave generated by part of the transmitted wave being reflected by the front object Obf and the reflected wave generated by the remaining part of the transmitted wave being reflected by the rear object Obr are superimposed and, hence, has a wider pulse width than the single-peak pulse waveform in the signal waveform of the reflected wave when the transmitted wave is reflected only by the front object Obf or only by the rear object Obr. As a result, the front object Obf and the rear object Obr cannot be distinguished from the single-peak pulse waveform as shown in FIG. 7C by the above threshold value determination. In addition, since a peak time of the single-peak pulse waveform as shown in FIG. 7C is between a peak time relating to the signal waveform of the reflected wave when the transmitted wave is reflected only by the front object Obf as shown in FIG. 7A (shown in broken line in FIG. 7C) and a peak time relating to the signal waveform of the reflected wave when the transmitted wave is reflected only by the rear object Obr as shown in FIG. 7A (shown in broken line in FIG. 7C), noise as shown by the point cloud PGn in FIG. 5 is generated.

Note that even if the front object Obf and the rear object Obr are relatively close, the signal waveform of the reflected wave when the transmitted wave is reflected on the side inwardly of the end of the front object Obf by the beam diameter (FIG. 7B) and the signal waveform of the reflected wave when the transmitted wave is reflected on the side inwardly of the end of the rear object Obr by the beam diameter (FIG. 7D) are respectively the same as in the cases shown in FIGS. 6B and 6D.

Whether or not the signal waveform of the reflected wave changes from a double-peak pulse waveform to a single-peak pulse waveform is related to the distance between the front object Obf and the rear object Obr and can be determined based on the gradient Gr between the target region and the predetermined peripheral region located around the target region (gradient Gr of the distance value between the pixel and the predetermined peripheral pixel located around this pixel in this embodiment). Whether or not the single-peak pulse waveform represents the reflected wave reflected near the end of the front object Obr on the side of the rear object Obr is related to the pulse width and can be determined based on the pulse width PW1 of the reflected wave relating to the target region and the pulse width PW2 of the reflected wave relating to the peripheral region (pulse width PW1 of the reflected wave relating to the pixel and the pulse width PW2 of the reflected wave relating to the peripheral pixel in this embodiment). Then, whether or not the pixel value of the pixel in the distance image is noise can be determined from these respective determination results (gradient determination result and pulse width determination result).

The inventor considers the noise generation mechanism as described above and the radar using the distance image processing device of this embodiment includes the noise determiner 222 as described above and operates as follows from this consideration.

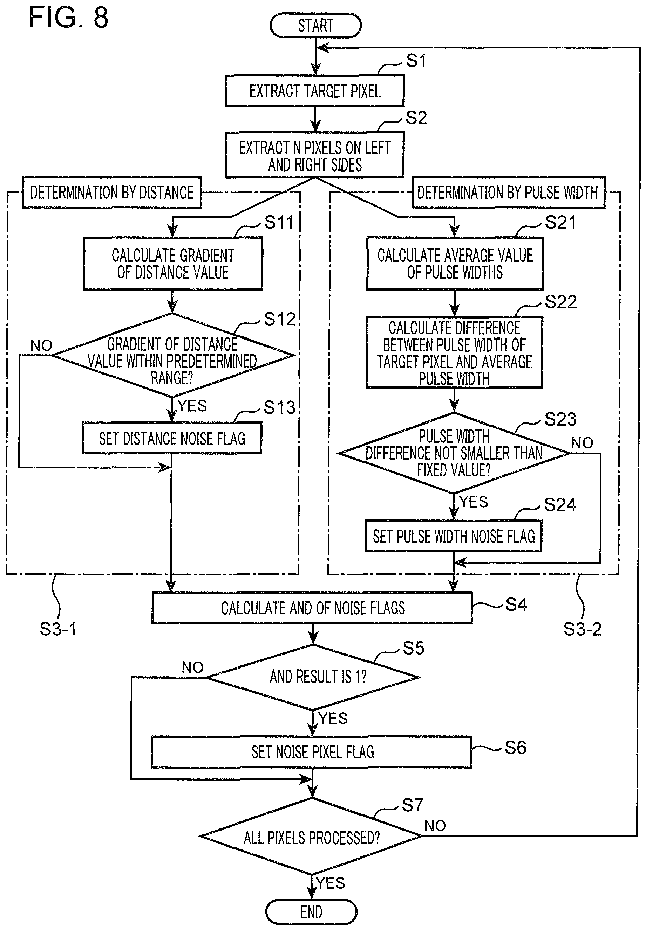

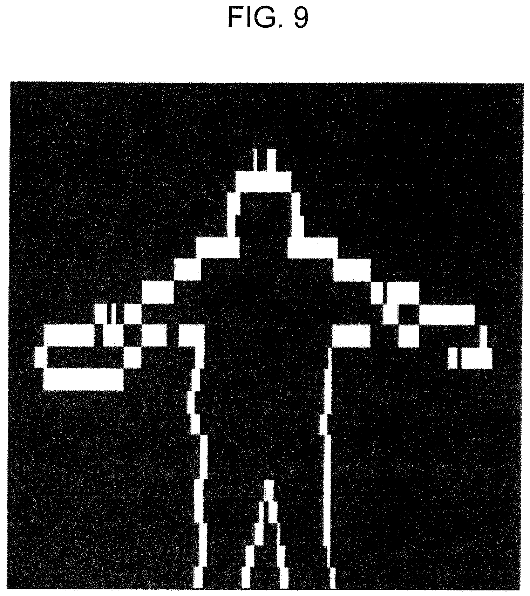

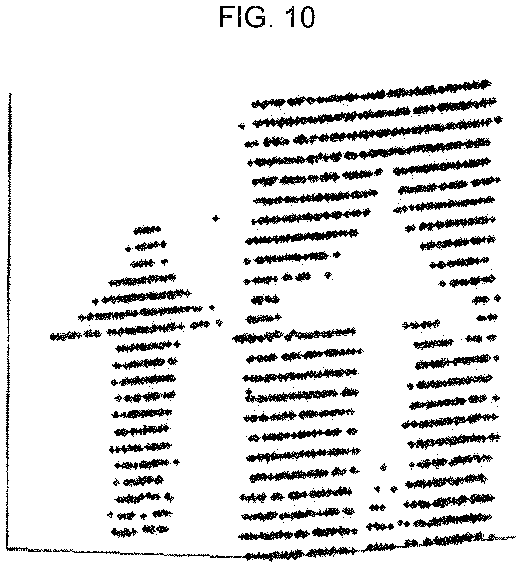

FIG. 8 is a flow chart showing the operation of the radar. FIG. 9 is a view showing noise regions judged by a process shown in the flow chart shown in FIG. 8 as white regions and regions not judged as noise as black regions. FIG. 10 is a view showing the distance image of FIG. 4 having the white regions in FIG. 9 removed therefrom by a three-dimensional point cloud.

When being started, the radar S initializes each of the necessary components and starts the operations of those components. Further, by the execution of the control processing programs, the controller 21 and the distance image generator 22 are functionally configured in the control processor 2, the distance image pre-processor 221, the noise determiner 222 and the noise remover 223 are functionally configured in the distance image generator 22, and the gradient processor 2221, the pulse width processor 2222 and the determiner 2223 are functionally configured in the noise determiner 222.

To generate a distance image before noise removal, the control processor 2 first measures the transmission/reception period for each of the plurality of directions. More specifically, the control processor 2 causes the transmitter 11 to transmit a wave in a first direction to be measured out of the plurality of directions by the controller 21, and notifies a transmission timing (transmission time) of this transmitted wave to the distance image pre-processor 221. When receiving a reflected wave corresponding to the transmitted wave, the receiver 12 outputs a digital signal corresponding to the intensity of the reflected wave to the control processor 2. The distance image pre-processor 221 of the control processor 2 obtains a transmission/reception period τ1 from the transmission timing (transmission time) of the transmitted wave relating to the first direction to the reception timing of receiving the digital signal from the receiver 12 (i.e. reception time of the reflected wave based on the transmitted wave relating to the first direction). The distance image pre-processor 221 calculates a distance in the first direction, out of the plurality of directions, by multiplying a propagation speed of the transmitted wave by half the obtained transmission/reception period τ1. Further, a period during which the reflected wave is not lower than a predetermined threshold value set in advance is measured and this measured period is set as a pulse width. In this way, a pixel value of a pixel corresponding to the first direction is obtained. Subsequently, to carry out a measurement at the second measurement point, the control processor 2 causes the transmitter 11 to transmit a wave in a second direction to be measured out of the plurality of directions by the controller 21, and notifies a transmission timing (transmission time) of this transmitted wave to the distance image pre-processor 221. When receiving a reflected wave corresponding to the transmitted wave, the receiver 12 outputs a digital signal corresponding to the intensity of the reflected wave to the control processor 2. The distance image pre-processor 221 of the control processor 2 obtains a transmission/reception period τ2 from the transmission timing (transmission time) of the transmitted wave relating to the second direction to the reception timing of receiving the digital signal from the receiver 12 (i.e. reception time of the reflected wave based on the transmitted wave relating to the second direction). The distance image pre-processor 221 calculates a distance in the second direction, out of the plurality of directions, by multiplying the propagation speed of the transmitted wave by half the obtained transmission/reception period τ2. Further, a period during which the reflected wave is not lower than the predetermined threshold value is measured and this measured period is set as a pulse width. In this way, a pixel value of a pixel corresponding to the second direction is obtained. Hereinafter, the control processor 2 similarly carries out a measurement and similarly calculates a distance by the distance image pre-processor 221 to the last one of the plurality of directions (plurality of measurement points), thereby measuring the transmission/reception period τ and calculating the distance for each of all the directions (all the measurement points). In this way, the irradiation range AR is two-dimensionally scanned, for example, from the first direction (first pixel) in which φ = -90° and θ = 90°-α to the last direction (last pixel) in which φ = 90° and θ = 90°+α.

If the distance image before noise removal is generated by the distance image pre-processor 221 by such an operation, the noise determiner 222 selects and extracts a predetermined target region from the distance image before noise removal generated by the distance image pre-processor 221 in FIG. 8. For example, the pixel corresponding to the first direction is selected and extracted as the target pixel (S1).

Subsequently, the noise determiner 222 selects and extracts a peripheral pixel located around the target pixel extracted in processing S1 (S2). For example, the noise determiner 222 extracts one or more pixels located along the lateral direction (-Y direction and +Y direction) from the target pixel extracted in processing S1 as the peripheral pixel(s). Alternatively, for example, the noise determiner 222 extracts one or more pixels located along the vertical direction (-Z direction and +Z direction) from the target pixel extracted in processing S1 as the peripheral pixel(s). Alternatively, for example, the noise determiner 222 extracts one or more pixels located along the lateral direction from the target pixel extracted in processing S1 and one or more pixels located along the vertical direction from the target pixel as the peripheral pixels. Alternatively, for example, the noise determiner 222 extracts a plurality of pixels located over the entire circumference of the target pixel extracted in processing S1 as the peripheral pixels. In this embodiment, the noise determiner 222 extracts one pixel located along the leftward direction (-Y direction) from the target pixel extracted in processing S1 and one pixel located along the rightward direction (+Y direction) from the target pixel as the peripheral pixels.

Subsequently, the noise determiner 222 performs a determination processing by distance by the gradient processor 2221 (S3-1) and performs a determination processing by pulse width by the pulse width processor 2222 (S3-2). These determination processing by distance S3-1 and determination processing by pulse width S3-2 may be performed in parallel or may be performed in a time-division manner. In the case of performing these in a time-division manner, it does not matter which of the determination processings S3-1, S3-2 is performed first.

In the determination processing by distance S3-1, each of the following processings is more specifically performed. First, the gradient processor 2221 calculates gradients Gr of distance values between the target pixel extracted in processing S1 and the peripheral pixels extracted in processing S2 (S11). Since the peripheral pixels are composed of one pixel in the -Y direction and one pixel in the +Y direction in this embodiment, a gradient Gr1 of a distance value between the one pixel in the -Y direction and the target pixel and a gradient Gr2 of a distance value between the one pixel in the +Y direction and the target pixel are calculated.

Note that if the noise determiner 222 extracts two pixels located along the leftward direction (-Y direction) from the target pixel and two pixels located along the rightward direction (+Y direction) from the target pixel as the peripheral pixels in processing S2 described above, gradients Gr1-1, Gr1-2 of respective distance values between these two pixels in the -Y direction and the target pixel and gradients Gr2-1, Gr2-2 of respective distance values between these two pixels in the +Y direction and the target pixel are calculated. In this case, a maximum gradient and a minimum gradient out of the gradients Gr1-1, Gr1-2, Gr2-1 and Gr2-2 of these four distance values may be set as the gradients of the distance values of the peripheral pixels.

Subsequently, the gradient processor 2221 determines whether or not the gradient Gr of the distance value calculated in processing S11 is within the predetermined range thg1 to thg2 (S12). The predetermined range thg1 to thg2 is appropriately set based on the aforementioned noise generation mechanism and is, for example, set from a result using a plurality of samples. If the gradient Gr of the distance value is within the predetermined range as a result of this determination (Yes, thg1 ≤ Gr ≤ thg2), the gradient processor 2221 sets "1" in a distance noise flag representing the gradient determination result associated with the target pixel (S13) and ends this determination processing by distance. On the other hand, if the gradient Gr of the distance value is not within the predetermined range as a result of the above determination (No, Gr < thg1 or thg2 < Gr), the gradient processor 2221 ends this determination processing by distance. The distance noise flag "1" represents that the gradient Gr of the distance value is within the predetermined range, and the distance noise flag "0" represents that the gradient Gr of the distance value is not within the predetermined range. Note that the distance noise flag is provided for each pixel in the distance image and set to "0" as a default in the aforementioned initialization.

In this embodiment, the gradient processor 2221 determines whether or not each of the gradient Gr1 of the distance value between the one pixel in the -Y direction and the target pixel and the gradient Gr2 of the distance value between the one pixel in the +Y direction and the target pixel is within the predetermined range thg1 to thg2 and performs processing S13 and ends the determination processing by distance if these gradients Gr1, Gr2 are both within the predetermined range thg1 to thg2 (Yes, thg1 ≤ Gr ≤ thg2) ,and ends the determination processing by distance if at least one of the gradients Gr1, Gr2 of these distance values is not within the predetermined range thg1 to thg2 (No, at least one of Gr1 < thg1, thg2 < Gr1, Gr2 < thg1 and thg2 < Gr2 is satisfied).

In the determination processing by pulse width S3-2, each of the following processings is more specifically performed. First, the pulse width processor 2222 calculates a pulse width PW1 of the signal waveform of the reflected wave relating to the target pixel extracted in processing S1 and pulse widths PW2 in the signal waveforms of the reflected waves relating to the peripheral pixels extracted in processing S2 (S21). Since the peripheral pixels are composed of one pixel in the -Y direction and one pixel in the +Y direction in this embodiment, the pulse width processor 2222 calculates a pulse width PW21 in the signal waveform of the reflected wave relating to the one pixel in the -Y direction and a pulse width PW22 in the signal waveform of the reflected wave relating to the one pixel in the +Y direction, and calculates an average value of these calculated pulse widths PW21, PW22 as the pulse width PW2.

Subsequently, the pulse width processor 2222 determines whether or not the pulse width PW1 of the reflected wave relating to the target pixel is larger than the pulse width PW2 of the reflected wave relating to the peripheral pixels. More specifically, the pulse width processor 2222 calculates a difference PWs between the pulse width PW1 relating to the target pixel and the pulse width PW2 (average value of the pulse widths PW21 and PW22 in this embodiment) relating to the peripheral pixels calculated in processing S21 (S22) and determines whether or not the difference PWs calculated in this processing S22 is not smaller than a predetermined threshold value thp (S23). The predetermined threshold value thp is appropriately set based on the aforementioned noise generation mechanism and is, for example, set from a result using a plurality of samples. If the difference PWs is not smaller than the predetermined threshold value thp as a result of this determination (Yes, thp ≤ PWs), the pulse width processor 2222 sets "1" in a pulse width noise flag representing the pulse width determination result associated with the target pixel (S23) and ends this determination processing by pulse width. On the other hand, if the difference PWs is smaller than the predetermined threshold value thp as a result of this determination (No, PWs < thp), the pulse width processor 2222 ends this determination processing by pulse width. The pulse width noise flag "1" represents that the difference PWs is not smaller than the threshold value thp, i.e. the pulse width PW1 of the reflected wave relating to the target pixel is larger than the pulse width PW2 of the reflected wave relating to the peripheral pixels, and the pulse width noise flag "0" represents that the different PWs is smaller than the threshold value thp, i.e. the pulse width PW1 of the reflected wave relating to the target pixel is not larger than the pulse width PW2 of the reflected wave relating to the peripheral pixels. Note that the pulse width noise flag is provided for each pixel in the distance image and set to "0" as a default in the aforementioned initialization.

After these determination processing by distance S3-1 and determination processing by pulse width S3-2 are performed, the noise determiner 222 determines whether or not the pixel is noise based on the gradient determination result of the gradient processor 2221 and the pulse width determination result of the pulse width processor 2222 by the determiner 2223. More specifically, the determiner 2223 performs an AND-operation of the distance noise flag and the pulse width noise flag in the target pixel (S4) and determines whether or not an AND-operation result of this processing S4 is 1 (S5). In the AND-operation, 1and1 = 1, 1and0 = 0, and 0and1 =0. If the AND-operation is 1 as a result of the determination of processing S5 (Yes), the determiner 2223 sets "1" in a noise pixel flag representing whether or not the target pixel is noise (S6) and performs the following processing S7. On the other hand, if the AND-operation is not 1 (No), the determiner 2223 performs the following processing S7. The noise pixel flag "1" represents that the pixel is noise, whereas the noise pixel flag "0" represents that the pixel is not noise. Note that the noise pixel flag is provided for each pixel in the distance image and set to "0" as a default in the aforementioned initialization.

In processing S7, the noise determiner 222 determines whether or not the aforementioned processings have been performed for all the pixels in the distance image before noise removal. If the aforementioned processings have not been performed for all the pixels as a result of this determination (No), the noise determiner 222 returns the process to processing S1 to process the next target pixel, e.g. the pixel corresponding to the second direction as the target pixel. On the other hand, if the aforementioned processings have been performed for all the pixels as a result of this determination (Yes), the noise determiner 222 ends the aforementioned process.

If the determination process as to whether or not the pixel is noise is finished for each of the pixels in the distance image before noise removal in this way, the noise remover 223 sets the pixel value of the target region determined as noise by the noise determiner 222 to a predetermined noise pixel value representing noise. More specifically, the noise remover 223 sets the pixel value of the pixel whose noise pixel flag is "1" to the noise pixel value. In this way, a distance image after noise removal is generated.

In an example, if the distance image shown in FIG. 4 is processed as described above, a binary image as shown in FIG. 9 in which the noise pixel flags are pixel values is obtained. In FIG. 9, the noise pixel flag "1" is set as a white pixel value and the noise pixel flag "0" is set as a black pixel value. As is understood from FIG. 9, an outline part of the front object Obf, i.e. the person Ob1 in this example, is determined as noise and it is understood that noise is extracted by the above process. Further, the distance image shown in FIG. 4 is a point cloud shown in FIG. 10 if the pixels whose noise pixel flags are "1" are removed and the distance image is represented by a three-dimensional point cloud. As is understood from the comparison of FIGS. 10 and 5, the point cloud PGn of noise is removed and it is understood that noise is extracted by the above process.

As described above, the distance image processing device incorporated into the radar and the distance image processing method and the distance image processing program implemented in this distance image processing device determine noise based on the gradient Gr and the pulse widths PW1, PW2. Thus, it is not necessary to obtain a luminance image and erroneous determination of noise when a part having a low reflectance is present on one surface can be reduced. Therefore, the distance image processing device incorporated into the radar and the distance image processing method and the distance image processing program can obtain a more accurate distance image even if a plurality of objects Obk are arranged one after another along a propagation direction of a transmitted wave.

Since the distance image processing device incorporated into the radar and the distance image processing method and the distance image processing program further include the noise remover 223, a distance image after noise removal having noise of the target region (target pixel) determined as noise by the noise determiner 222 removed therefrom can be obtained.

Note that, in the above embodiment, the control processing programs including the distance image generation programs may be provided by a recording medium recording the control processing programs. In this case, for example, the radar S further includes an interface for the input of data of the recording medium, and the control processing programs are installed in the storage 3 via the interface from the recording medium.

Further, in the above embodiment, the distance image processing device incorporated into the radar S may include a noise corrector 224 shown by broken line in FIG. 1 instead of the noise remover 223. This noise corrector 224 is functionally configured in the distance image generator 22 and sets a pixel value of a target region (target pixel) determined as noise by the noise determiner 222 to a noise correction value obtained based on a pixel value of a region (pixel) not determined as noise out of a predetermined second peripheral region (second peripheral pixels) located around the target region (target pixel). The noise pixel value is, for example, a minimum value of the pixel values of the regions (pixels) not determined as noise out of the second peripheral region (second peripheral pixels). Since the noise corrector 224 is provided according to this, it is possible to obtain a corrected distance image in which the pixel value of the target region (target pixel) determined as noise by the noise determiner 222 is corrected by the noise correction value obtained based on the pixel value of the region (pixel) not determined as noise out of the second peripheral region (second peripheral pixels).

Further, in the above embodiment, the distance image processing device incorporated into the radar S may further include an edge region extractor 225 shown by broken line in FIG. 1. This edge region extractor 225 is functionally configured in the distance image generator 22 and sets the pixel value of the target region (target pixel) determined as noise by the noise determiner 222 as an edge region representing an edge. Since the edge region extractor 225 is provided according to this, the target region (target pixel) determined as noise by the noise determiner 222 can be further extracted as the edge region.

Note that although the predetermined range thg1 to thg2 is set in advance and fixedly used in the above embodiment, a plurality of ranges thg1 to thg2 may be prepared in association with a predetermined condition and the range thg1 to thg2 meeting the present condition may be selected out of the plurality of ranges thg1 to thg2 and used. Similarly, although the threshold value thp is set in advance and fixedly used, a plurality of threshold values thp may be prepared in association with a predetermined condition and the threshold value thp meeting the present condition may be selected out of the plurality of threshold values thp and used.

Further, the predetermined range thg1 to thg2 may be changed according to the pixel value (distance value) of the target pixel. Similarly, the threshold value thp may be changed according to the pixel value (distance value) of the target pixel. In an example, the predetermined range thg1 to thg2 is changed to increase the difference between thg1 and thg2 and the threshold value thp is changed to increase as the target pixel approaches from a position near the radar S to a distant position. This corresponds to an increase in the spot size of the transmitted laser with distance from the radar S.

This specification discloses various technologies as described above. Out of those, the main technologies are summarized below.

A distance image processing device according to one mode includes a distance image acquirer configured to transmit a predetermined pulsed transmitted wave in each of a plurality of directions different from each other, receive a plurality of reflected waves based on the plurality of respective transmitted waves and obtain a distance image having a plurality of pixels corresponding to each of the plurality of directions based on the plurality of transmitted waves and the plurality of reflected waves, and a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region. Preferably, in the above distance image processing device, the noise determiner divides the distance image into a plurality of regions and determines the region as noise for each of the plurality of regions if the gradient of the distance value between the region and a predetermined peripheral region located around the region is within a predetermined range and a pulse width of the reflected wave relating to the region is larger than a pulse width of the reflected wave relating to the peripheral region. Further preferably, in the above distance image processing device, the noise determiner determines the pixel as noise for each of the plurality of pixels if a gradient of a distance value between the pixel and a predetermined peripheral pixel located around the pixel is within a predetermined range and a pulse width of the reflected wave relating to the pixel is larger than a pulse width of the reflected wave relating to the peripheral pixel.

Since such a distance image processing device determines noise based on the gradient of the distance value and the pulse widths, it is not necessary to obtain a luminance image and erroneous determination of noise when a part having a low reflectance is present on one surface can be reduced. Therefore, the above distance image processing device can obtain a more accurate distance image even if a plurality of objects are arranged one after another along a propagation direction of a transmitted wave.

In another mode, the above distance image processing device further includes a noise remover configured to set a pixel value of the target region determined as noise by the noise determiner to a predetermined noise pixel value representing noise. Preferably, in the above distance image processing device, the noise pixel value is a pixel value representing a distance infinity.

Since such a distance image processing device further includes the noise remover, it is possible to obtain a distance image after noise removal having the noise of the target region determined as noise by the noise determiner removed therefrom.

In another mode, the above distance image processing device further includes a noise corrector configured to set the pixel value of the target region determined as noise by the noise determiner to a noise correction value calculated based on a pixel value of a region not determined as noise out of a predetermined second peripheral region located around the target region. Preferably, in the above distance image processing device, the noise pixel value is a minimum value of the pixel values of the regions not determined as noise out of the second peripheral region.

Since such a distance image processing device further includes the noise corrector, it is possible to obtain a corrected distance image in which the pixel value of the target region determined as noise by the noise determiner is corrected by the noise correction value calculated based on the pixel value of the region not determined as noise out of the second peripheral region.

In another mode, the above distance image processing device further includes an edge region extractor configured to set the target region determined as noise by the noise determiner as an edge region representing an edge.

Such a distance image processing device can extract the target region determined by the noise determiner as the edge region.

A distance image processing method according to another mode includes a distance image acquiring step of transmitting a predetermined pulsed transmitted wave in each of a plurality of directions different from each other, receiving a plurality of reflected waves based on the plurality of respective transmitted waves and obtaining a distance image having a plurality of pixels corresponding to each of the plurality of directions based on the plurality of transmitted waves and the plurality of reflected waves, and a noise determining step of determining a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.

A distance image processing program according to another mode is a distance image processing program for causing a computer including a distance image acquirer configured to transmit a predetermined pulsed transmitted wave in each of a plurality of directions different from each other, receive a plurality of reflected waves based on the plurality of respective transmitted waves and obtain a distance image having a plurality of pixels corresponding to each of the plurality of directions based on the plurality of transmitted waves and the plurality of reflected waves to function as a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.

A recording medium recording a distance image processing program according to another mode is a recording medium recording a distance image processing program for causing a computer including a distance image acquirer configured to transmit a predetermined pulsed transmitted wave in each of a plurality of directions different from each other, receive a plurality of reflected waves based on the plurality of respective transmitted waves and obtain a distance image having a plurality of pixels corresponding to each of the plurality of directions based on the plurality of transmitted waves and the plurality of reflected waves to function as a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.

Since such distance image processing method and distance image processing program determine noise based on the gradient of the distance value and the pulse widths, it is not necessary to obtain a luminance image and erroneous determination of noise when a part having a low reflectance is present on one surface can be reduced. Therefore, the above distance image processing method and distance image processing program can obtain a more accurate distance image even if a plurality of objects are arranged one after another along a propagation direction of a transmitted wave. The above recording medium can provide such a distance image processing program.

This application is based on Japanese Patent Application No. 2015-126567 filed on June 24, 2015, and the contents thereof are included in this application.

To express the present invention, the present invention has been appropriately and sufficiently described through the embodiment with reference to the drawings above. However, it should be recognized that those skilled in the art can easily modify and/or improve the embodiment described above. Therefore, it is construed that modifications or improvements made by those skilled in the art are included within the scope of the appended claims unless those modifications or improvements depart from the scope of the appended claims.

### INDUSTRIAL APPLICABILITY

According to the present invention, it is possible to provide a distance image processing device, a distance image processing method, a distance image processing program and a recording medium.

## Claims

1. A distance image processing device, comprising:
a distance image acquirer configured to transmit a predetermined pulsed transmitted wave in each of a plurality of directions different from each other, receive a plurality of reflected waves based on the plurality of respective transmitted waves and obtain a distance image having a plurality of pixels corresponding to each of the plurality of directions based on the plurality of transmitted waves and the plurality of reflected waves; and
a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.

2. A distance image processing device according to claim 1, further comprising a noise remover configured to set a pixel value of the target region determined as noise by the noise determiner to a predetermined noise pixel value representing noise.

3. A distance image processing device according to claim 1, further comprising a noise corrector configured to set a pixel value of the target region determined as noise by the noise determiner to a noise correction value calculated based on a pixel value of a region not determined as noise out of a predetermined second peripheral region located around the target region.

4. A distance image processing device according to any one of claims 1 to 3, further comprising an edge region extractor configured to set the target region determined as noise by the noise determiner as an edge region representing an edge.

5. A distance image processing method, comprising:
a distance image acquiring step of transmitting a predetermined pulsed transmitted wave in each of a plurality of directions different from each other, receiving a plurality of reflected waves based on the plurality of respective transmitted waves and obtaining a distance image having a plurality of pixels corresponding to each of the plurality of directions based on the plurality of transmitted waves and the plurality of reflected waves; and
a noise determining step of determining a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.

6. A distance image processing program for causing a computer including a distance image acquirer configured to transmit a predetermined pulsed transmitted wave in each of a plurality of directions different from each other, receive a plurality of reflected waves based on the plurality of respective transmitted waves and obtain a distance image having a plurality of pixels corresponding to each of the plurality of directions based on the plurality of transmitted waves and the plurality of reflected waves:
to function as a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.

7. A recording medium recording a distance image processing program for causing a computer including a distance image acquirer configured to transmit a predetermined pulsed transmitted wave in each of a plurality of directions different from each other, receive a plurality of reflected waves based on the plurality of respective transmitted waves and obtain a distance image having a plurality of pixels corresponding to each of the plurality of directions based on the plurality of transmitted waves and the plurality of reflected waves:
to function as a noise determiner configured to determine a target region as noise if a gradient of a distance value between the target region and a predetermined peripheral region located around the target region is within a predetermined range and a pulse width of the reflected wave relating to the target region is larger than a pulse width of the reflected wave relating to the peripheral region when a predetermined region in the distance image is the target region.
